# EUROPÄISCHE PATENTSCHRIFT

(11) **EP 2 286 960 B1**
(45) Veröffentlichungstag und Bekanntmachung des Hinweises auf die Patenterteilung: **13.05.2020**
(21) Anmeldenummer: 10173083.6
(22) Anmeldetag: 17.08.2010
(51) Int. Cl.: B25B 5/14, B23C 3/18, B23Q 3/06

(54) **Spannvorrichtung zum Einspannen eines Rohlings einer Turbinenschaufel in einer Bearbeitungsmaschine, insbesondere in einer Fräsmaschine**
Clamping device for tensioning a blank of a turbine blade in a processing machine, in particular a milling machine
Dispositif de serrage destiné à fixer une ébauche d'une aube de turbine dans une machine de traitement, notamment dans une fraiseuse

(30) Priorität: 17.08.2009 DE 102009026389
(43) Veröffentlichungstag der Anmeldung: 23.02.2011
(73) Patentinhaber: Scherer Engineering GmbH, 60529 Frankfurt am Main (DE)
(72) Erfinder: Grassl, Johann, 73249, Wernau (DE); Scherer, Josef, Prof. Dr., 60529, Frankfurt (DE); Scherer, Frank, 60529, Frankfurt (DE)
(74) Vertreter: Habermann Intellectual Property Partnerschaft von Patentanwälten mbB

(56) Entgegenhaltungen:
- EP-A1- 0 523 573
- EP-A1- 2 002 926
- EP-A2- 0 924 032
- WO-A1-03/064089
- US-A- 6 106 204
- US-A1- 2005 268 463
- US-B1- 6 186 867

## Beschreibung

Spannvorrichtung zum Einspannen eines Rohlings einer Turbinenschaufel in einer Bearbeitungsmaschine, insbesondere in einer Fräsmaschine Die Erfindung betrifft eine Spannvorrichtung für eine Bearbeitungsmaschine, insbesondere für eine Fräsmaschine, mit mindestens zwei relativ zueinander verlagerbaren Klemmbacken, wobei mindestens eine in Richtung des aufzunehmenden Rohlings vorspringende Ausformung zum Eingriff in eine Ausnehmung des Rohlings der Turbinenschaufel auf, die außermittig angeordnet ist.

Zum Bearbeiten von Rohlingen in einer Fräsmaschine müssen diese auf geeignete Spannsysteme aufgenommen, fixiert und eingespannt werden. Diese Einspannung muss dabei so beschaffen sein, dass der Rohling, der bei seiner Bearbeitung rotiert, immer um eine vorgegebene Rotationsachse rotiert und entsprechend eingespannt ist. Die Einspannung muss weiterhin ausreichend widerstandsfähig sein, so dass insbesondere bei spanenden Bearbeitungsvorgängen auch größere Kräfte ohne weiteres abgeleitet werden können und nicht zu einer Verlagerung des Rohlings, bzw. zu einer Verlagerung des Rotationszentrums führen. Andererseits sollte der Rohling insbesondere an seinen der jeweiligen Spannvorrichtung zugewandten Endbereichen gut zugänglich sein, so dass möglichst kurze Werkzeuge zum Einsatz kommen können und eine weitgehende Bearbeitung dieser Bereiche in einfacher Weise möglich ist. Dies bedeutet, dass die Spannvorrichtung einen möglichst kleinen Flugkreis zulässt.

Um Turbinenschaufeln aus einem Rohling herstellen zu können, muss der Rohling auf einer Fräsmaschine eingespannt werden. Hierzu werden üblicherweise Spannvorrichtungen mit Klemmbacken verwendet, die den Rohling klemmend an der Spannvorrichtung festlegen. Die Ausrichtung des Rohlings erfolgt über eine Mittenbohrung an den gegenüberliegenden Endflächen des Rohlings, die bei der Herstellung des Rohlings eingearbeitet werden und dessen Rotationsachse vorgeben. Um eine zuverlässige Aufnahme des Rohlings zwischen den Klemmbacken gewährleisten zu können, werden oftmals in einem ersten Arbeitsgang Spannflächen im Bereich der Endflächen herausgearbeitet. Diese Parallelflächen sollen möglichst klein sein und innerhalb der Kopf- und Fußaußenkontur der fertigen Turbinenschaufel liegen, um Materiallänge bei dem Rohling einsparen zu können. Dies stellt einen zusätzlichen Arbeitsschritt dar, der vor einer Aufnahme des Rohlings zur Bearbeitung in der Fräsmaschine vorgenommen werden muss.

Marktübliche Zweibackenfutterzentralspanner sind für viele Anwendungen ungeeignet, da sie keine Zentrumsfixierung aufweisen, so dass der Rohling hiermit nicht zuverlässig rotationssymmetrisch eingespannt werden kann.

Es sind Spannvorrichtungen aus der Praxis bekannt, die eine Mittenzentrierung des Rohlings ermöglichen. Allerdings können diese Spannvorrichtungen über die Mittenzentrierung des Rohlings keine eindeutige Positionierung des Rohlings gewährleisten, so dass beispielsweise die Ausrichtung des Rohlings um 180° vertauschbar ist, so dass insbesondere bei anschließenden Bearbeitungsschritten, die ein erneutes Einspannen der Turbinenschaufel in derselben Fräsmaschine oder in einer anderen Bearbeitungsmaschine, nicht zuverlässig eine identische Ausrichtung der Turbinenschaufel gewährleistet werden kann.

Bei einer Spannvorrichtung der eingangs genannten Gattung, wie sie beispielsweise in EP 2 002 926 A1 beschrieben ist, werden Rohlinge zunächst mit einer den Rohling im Fußbereich und im Kopfbereich aufnehmenden Zentriereinrichtung positioniert und dann durch seitlich im Abstand zu dem Fußbereich und dem Kopfbereich angeordnete Klemmbacken fixiert. Bevor die Bearbeitung des Rohlings erfolgen kann muss die Zentriereinrichtung manuell von dem Rohling und der Spannvorrichtung entfernt werden. Mit einer derartigen Spannvorrichtung kann der von den Klemmbacken erfasste und bedeckte Bereich eines Rohlings zwischen dem Fußbereich und dem Kopfbereich nicht bearbeitet werden.

Es wird als eine Aufgabe der vorliegenden Erfindung angesehen, dass mit der Spannvorrichtung unterschiedliche Rohlinge möglichst einfach und rasch mit einer an die endgültige Kontur angepassten Formgebung hergestellt werden können. Die Spannvorrichtung sollte einen möglichst geringen Raumbedarf aufweisen. Zudem sollte die Spannvorrichtung so gestaltet sein, dass sie auf den unterschiedlichen Fräsmaschinen, insbesondere auf Schaufelfräsmaschinen einsetzbar ist.

Erfindungsgemäß ist vorgesehen, dass die mindestens eine außermittige Ausformung auf einem zwischen den Klemmbacken quer zu einer Rotationsachse angeordneten Querjoch angeordnet ist. Um zunächst eine vorläufige Fixierung des Rohlings zu ermöglichen, kann der Rohling auf die außermittige Ausformung und zusätzlich auf eine gegebenenfalls vorhandene mittige Ausformung angepresst werden. Der Anpressdruck muss lediglich ausreichend hoch vorgegeben werden, um gewährleisten zu können, dass der Rohling sich während des eventuell zweckmäßigen Anarbeitens von Spannflächen nicht verschiebt oder verlagert.

Die außermittig angeordnete Ausformung dient zur eindeutigen und reproduzierbaren Ausrichtung des Rohlings relativ zur Rotationsachse, die üblicherweise durch die Mittenbohrungen in den Endflächen des Rohlings vorgegeben ist. Auf diese Weise kann bei nachfolgenden Bearbeitungsvorgängen insbesondere eine Vertauschung der Ausrichtung teilweise oder vollständig bearbeiteter Turbinenschaufeln um 180° um die Rotationsachse vermieden werden.

Um anschließend den Rohling zwischen den Klemmbacken klemmend festlegen zu können, ohne dass der Rohling von der Spannvorrichtung gelöst und erneut ausgerichtet und eingespannt werden muss, ist in besonders vorteilhafter Weise vorgesehen, dass das Querjoch in Richtung der Rotationsachse von dem Rohling weg verlagerbar ist. Es ist ebenso denkbar, dass die mindestens eine außermittige Ausformung und eine gegebenenfalls vorhandene mittige Ausformung getrennt voneinander an der Spannvorrichtung angeordnet und von dem Rohling weg verlagerbar sind. Zum endgültigen Festlegen des Rohlings müssen lediglich das Querjoch oder die einzeln gelagerten vorspringenden Ausformungen von dem Rohling weg verlagert werden, so dass der Rohling zwischen die Klemmbacken verlagert und dort klemmend festgelegt werden kann.

Dies kann in einfacher Weise dadurch erreicht werden, dass das Querjoch entgegen einer Federkraft von dem Rohling weg verlagerbar ist. Die Federkraft muss ausreichend hoch eingestellt oder vorgegeben werden können, um dem Anpressdruck entgegenwirken zu können, der zum Anarbeiten von Spannflächen benötigt wird. In den meisten Fällen wird es ausreichen, die Federkraft so hoch vorzugeben, dass beim Lösen der Klemmbacken der Rohling nicht auf Grund seines Eigengewichts herausfallen kann. Sobald der Anpressdruck weiter erhöht wird, verlagert sich das Querjoch gegen die nicht mehr ausreichend kompensierende Federkraft, so dass der Rohling zwischen die Klemmbacken eindringen und dort festgelegt werden kann.

Um den Herstellungsaufwand für die Spannvorrichtung gering zu halten und gleichzeitig eine zuverlässige und präzise Ausrichtung des Rohlings gewährleisten zu können ist vorgesehen, dass die mindestens eine außermittig angeordnete Ausformung ein Kegelstift ist.

Weiterhin ist vorgesehen, dass die Spannvorrichtung eine auf dem Querjoch mittig angeordnete Ausformung aufweist, die ebenfalls ein Kegelstift sein kann. Die mittig angeordnete Ausformung kann in die bei Rohlingen üblicherweise vorhandene Mittenbohrung eingreifen und zusätzlich zur vorläufigen Fixierung sowie zur eindeutigen Positionierung und Ausrichtung des Rohlings verwendet werden.

Um eine unerwünschte Lageveränderung des Rohlings während der Bearbeitung mit der Fräsmaschine möglichst vermeiden zu können ist vorgesehen, dass die Klemmbacken an einer dem aufzunehmenden Rohling zugewandten Oberfläche mindestens eine vorspringende Ausformung aufweisen. Die Ausformung dringt vorzugsweise formschlüssig in den Rohling, bzw. in die der Klemmbacke zugeordnete Spannfläche ein und verhindert eine Bewegung des Rohlings relativ zu der Klemmbacke.

Es hat sich als besonders vorteilhaft herausgestellt, dass die Klemmbacken eine wellenförmige Oberflächenprofilierung aufweisen.

Um nicht nur quaderförmige Rohlinge zwischen den Klemmbacken festlegen zu können ist vorgesehen, dass die Klemmbacken schwenkbar gelagert sind. Die schwenkbar gelagerten Klemmbacken können sich an gekrümmte oder nicht parallel verlaufende Spannflächen des Rohlings anpassen und auch bei einer komplexen Formgebung des Rohlings dessen zuverlässige Festlegung zwischen den zusammengepressten Klemmbacken ermöglichen.

Gemäß einer Ausgestaltung des Erfindungsgedankens ist vorgesehen, dass die Klemmbacken quer zur Rotationsachse verlagerbar sind. Auf diese Weise können auch Rohlinge in der Spannvorrichtung festgelegt werden, deren Endfläche sich außerhalb der Rotationsachse befindet.

Es ist aus der Praxis auch bekannt, dass beispielsweise Schmiede- oder Gussschaufeln ohne bereits angefräste Parallelflächen eingespannt und bearbeitet werden müssen. Bei solchen Rohlingen für Turbinenschaufeln liegen die Klemmbacken auf der noch unbearbeitete Schmiede- oder Gusshaut auf. Die Orientierung eines derartigen Rohlings erfolgt üblicherweise durch mindestens drei Fixierpunkte, die ausnahmslos außerhalb der Schaufelrotationsachse liegen. Während an einer Endfläche des Rohlings ein einzelner Fixierpunkt ausreicht, sind an der gegenüber liegenden Endfläche zwei Fixierpunkte außerhalb der Schaufelrotationsachse und asymmetrisch angeordnet.

Ein solcher Fixierpunkt ist in der Regel eine Bohrung mit einem sich verjüngenden Bohrdurchmesser, wie es beispielsweise gemäß DIN 332 vorgesehen ist. Diese Fixierpunkte, bzw. Bohrungen werden nach dem Schmieden oder Gießen des Rohlings in einem nachfolgenden separaten Arbeitsschritt durch mechanische Nachbearbeitung eingebracht.

Bedingt durch das Herstellungsverfahren lassen sich Unregelmäßigkeiten bei der Einbringung der Fixierpunkte (bekannte Toleranzen bei der Bearbeitung und nicht vorhersehbare Formabweichungen) nicht oder nur mit einem erheblichen Aufwand vermeiden. Insbesondere ist es bei der Einbringung von zwei Fixierpunkten an einer Endfläche kaum möglich, die beiden Fixierpunkte ohne jegliche Abweichung auf derselben, für die nachfolgende Bearbeitung ideal vorgesehenen Ebene senkrecht zur Schaufelrotationsachse anzuordnen. Wenn die beiden Fixierpunkte nicht in einer Ebene liegen und ein Fixierpunkt beispielsweise etwas tiefer in den Rohling eingebracht ist, so dass die beiden Fixierpunkte einen axialen Versatz relativ zueinander aufweisen, kann eine zuverlässige und spielfreie Positionierung und klemmende Festlegung des Rohlings in der Spannvorrichtung kaum gewährleistet werden.

Um insbesondere in derartigen Fällen dennoch eine sichere und zuverlässige Aufnahme des Rohlings zu ermöglichen ist erfindungsgemäß vorgesehen, dass ein Querjoch, das zwei auf gegenüberliegenden Seiten außerhalb der Schaufelrotationsachse angeordnete axial verlagerbare Kegelstifte trägt, eine senkrecht zur Schaufelrotationsachse schwenkbar gelagerte Wippe aufweist, die mit den beiden Kegelstiften in Wirkverbindung steht. Wird die Spannvorrichtung mit dem Querjoch an die zugeordnete Endfläche des Rohlings mit den beiden Fixierpunkten angedrückt, so können die beiden Kegelstifte eine beispielsweise toleranzbedingte Ebenenabweichung der Fixierpunkte ausgleichen. Die beiden über die Wippe miteinander in Wirkverbindung stehenden Kegelstifte dringen jeweils spielfrei in die zugeordnete Bohrung des Fixierpunkts ein und können durch eine daran angepasste axiale Verlagerung die Ebenenabweichung der Bohrungen ausgleichen.

Mit der erfindungsgemäßen Spannvorrichtung kann in einfacher Weise aus einem Rohling eine Turbinenschaufel hergestellt werden. In einem vorausgehenden Arbeitsschritt wird mindestens eine außermittige Ausnehmung zur Festlegung der Ausrichtung in einer Endfläche des Rohlings erzeugt und bei dem anschließenden Einspannen des Rohlings die Ausnehmung mit einer daran angepassten Ausformung der Spannvorrichtung in Eingriff gebracht. Durch die zusätzliche Ausnehmung kann eine eindeutige Ausrichtung des Rohlings vorgegeben und auch nach einer Entnahme des teilweise oder vollständig bearbeiteten Rohlings aus der Spannvorrichtung erneut hergestellt und gewährleistet werden. Dies hat den Vorteil, dass nicht nur während der Bearbeitung auf der Fräsmaschine, sondern insbesondere bei nachfolgenden Bearbeitungsvorgängen oder Kontrollmessungen jeweils die vorgesehene, bzw. ursprünglich vorgegebene Ausrichtung hergestellt werden kann. Die Präzision der Bearbeitung der Rohlinge kann erheblich verbessert werden. Werden zwei oder mehr Ausnehmungen erzeugt, so dürfen die Ausnehmungen nicht symmetrisch relativ zur Mittenbohrung angeordnet sein, um eine eindeutige Ausrichtung des Rohlings gewährleisten zu können.

Die Ausnehmung kann in einfacher Weise ohne größeren Aufwand dadurch erzeugt werden, dass die Ausnehmung eine Sackbohrung ist, die mittels eines geeigneten Bohrwerkzeugs in der der Spannvorrichtung zugewandten Endfläche des Rohlings hergestellt wird.

Um einen zusätzlichen Bearbeitungsschritt vor der Aufnahme des Rohlings in der Spannvorrichtung vermeiden zu können ist vorgesehen, dass der Rohling zunächst durch Anpressen an mindestens eine vorspringende Ausformung der Spannvorrichtung fixiert wird, anschließend den Klemmbacken zugewandte seitliche Spannflächen angearbeitet werden und danach der Rohling zwischen den Klemmbacken festgelegt wird, um die Bearbeitung des Rohlings zu ermöglichen. Für die Anarbeitung von Spannflächen ist es nicht zwingend erforderlich, den Rohling bereits endgültig in der Spannvorrichtung festzulegen. Die bei dem Fräsen der oftmals kleinen Spannflächen auftretenden Kräfte können mittels Anpressen an eine geeignete Ausformung aufgenommen werden, ohne dass der Rohling bereits zwischen den Klemmbacken klemmend festgelegt sein muss.

Vorzugsweise ist vorgesehen, dass der Rohling an zwei oder mehr stiftförmige Ausformungen angepresst wird, die in daran angepasste Ausnehmungen des Rohlings eingreifen. Dabei kann es sich beispielsweise um die Mittenbohrung und um eine in einem vorangegangenen Arbeitsschritt erzeugte Ausnehmung zur Ausrichtung des Rohlings handeln. Nachfolgend werden beispielhafte Ausgestaltungen des Erfindungsgedankens näher erläutert, die in der Zeichnung dargestellt sind. Es zeigt
Fig. 1 eine teilweise in geschnittener Darstellung abgebildete Seitenansicht einer Spannvorrichtung mit einem nur teilweise dargestellten, darin aufgenommenen Rohling für eine Turbinenschaufel,
Fig. 2 eine exemplarische Seitenansicht eines Turbinenschaufelrohlings,
Fig. 3 eine Draufsicht auf den in Fig. 2 dargestellten Rohling,
Fig. 4 drei exemplarische Ansichten einer Klemmbacke,
Fig. 5 drei exemplarische Ansichten einer anders ausgestalteten Klemmbacke,
Fig. 6 zwei exemplarische Ansichten einer Spannbacke mit zwei darin gelagerten Klemmbacken,
Fig. 7 eine schematische Darstellung eines Wellenprofils der Seitenkanten der in den Fig. 4 bis 6 dargestellten Klemmbacken,
Fig. 8 eine Darstellung eines zwischen zwei Spannbacken festgelegten Rohlings,
Fig. 9 eine Darstellung eines zwischen zwei anders ausgestalteten Spannbacken festgelegten Rohlings mit gekrümmten Spannflächen,
Fig. 10 eine teilweise geschnittene Darstellung eines Rohlings mit lediglich einer in einer Endfläche angeordneten Mittenbohrung, der zwischen zwei Spannvorrichtungen auf einer nicht dargestellten Fräsmaschine eingespannt werden kann,
Fig. 11 eine Seitenansicht eines Turbinenschaufelrohlings, der zwischen zwei Spannvorrichtungen einer Fräsmaschine eingespannt wird, zu Beginn des Einspannvorgangs,
Fig. 12 bis 16 eine teilweise geschnitten dargestellte Draufsicht auf den eingespannten Rohling gemäß Fig. 11 zu jeweils einem späteren Zeitpunkt während des Einspannvorgangs,
Fig. 17 eine Seitenansicht des fertig eingespannten Turbinenschaufelrohlings während der nachfolgenden Bearbeitung mit der Fräsmaschine,
Fig. 18 eine Seitenansicht des Turbinenschaufelrohlings gemäß Fig. 17 während der nachfolgenden Ablängung der Turbinenschaufel am Schaufelkopf,
Fig. 19 eine schematische Draufsicht auf ein Querjoch, wie es üblicherweise bei Guss- und Schmiedeschaufeln verwendet wird,
Fig. 20 eine schematische Draufsicht auf ein Querjoch, wie es üblicherweise bei quaderförmigen Rohlingen verwendet wird,
Fig. 21 eine teilweise geschnitten dargestellte Draufsicht auf einen anders eingespannten Turbinenschaufelrohling,
Fig. 22 eine schematische Darstellung eines Querjochs mit zwei axial verlagerbaren Kegelstiften, die über eine Wippe miteinander in Wirkverbindung stehen, und
Fig. 23 eine mit Fig. 8 vergleichbare Ansicht einer Endfläche eines Rohlings mit zwei außermittigen Fixierpunkten, wobei zwei Spannbacken in einer auseinandergezogenen Position abgebildet sind.

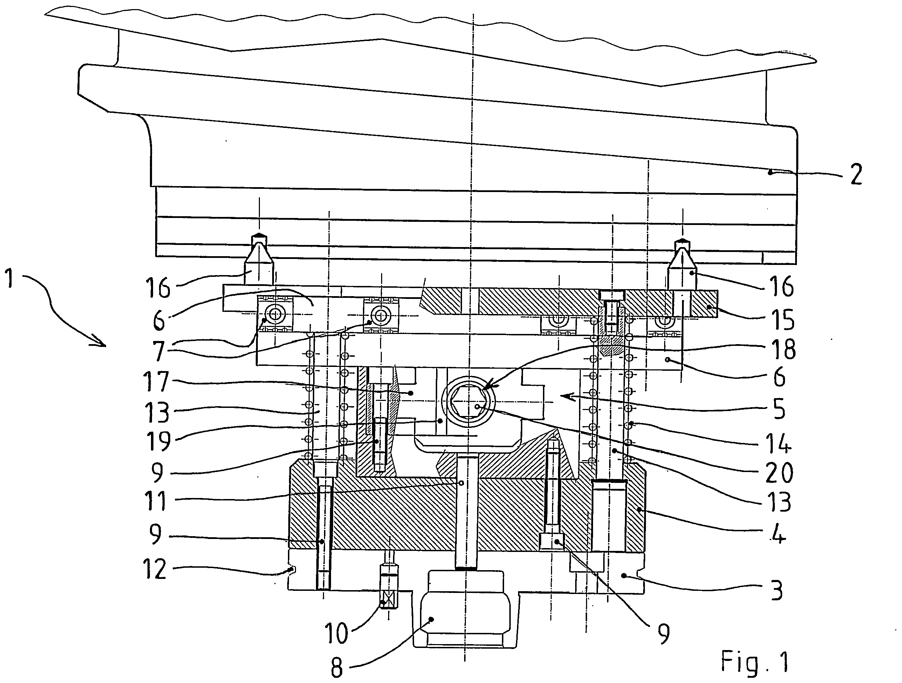

Eine in Figur 1 abgebildete Spannvorrichtung 1 für Rohlinge 2, insbesondere für Turbinenschaufeln, ist modular aufgebaut. Die Spannvorrichtung 1 weist eine Adapterplatte 3, eine Grundplatte 4 und eine Zentrumsspanneinheit 5 auf, an der Spannbackenmodule 6 mit jeweils mindestens einer Klemmbacke 7 gelagert sind.

Durch eine geeignete Kombination dieser Komponenten lassen sich nahezu alle Spannprobleme bei der Herstellung von Turbinenschaufeln aus den verschiedensten Rohlingsausgangszuständen realisieren.

Die Adapterplatte 3 stellt das Verbindungsstück zwischen einem in der Maschinendrehachse 8, bzw. in der Rotationsachse angeordneten Antriebssystem der Bearbeitungsmaschine, bzw. der Fräsmaschine dar. Auf der Adapterplatte werden entweder nur eine Zentrumsspanneinheit 5 oder eine Grundplatte 4 und eine Zentrumsspanneinheit 5 beispielsweise mittels geeigneter Verschraubungen 9 befestigt.

Die Adapterplatte 3 wird an deren Unterseite durch das in der Maschinendrehachse 8 befindliche Spannsystem der Bearbeitungsmaschine an diesem fixiert. Dies kann z.B. eine HSK-Schnittstelle mit Innenspanner sein, ähnlich wie bei Werkzeugspannsystemen. Es können hier aber auch alle anderen auf dem Markt befindlichen Schnittstellen wie z.B. Steilkegel, etc. zum Einsatz kommen.

Sind große bzw. sehr schwere Rohlinge 2, bzw. Turbinenschaufeln zu spannen, dann kann die Adapterplatte 3 noch zusätzlich an dem Spannsystem im Bereich der Maschinendrehachse 8 festgelegt und fixiert werden. Hierdurch wird sichergestellt, dass die Adapterplatte 3 absolut zentrisch zur Maschinendrehachse angeordnet ist und ohne Wucht rotieren kann. Die präzise Positionierung der Adapterplatte 3 zur Maschinendrehachse 8 übernimmt ein Schwertstift 10.

Auf einer Oberseite der Adapterplatte 3 werden dann optional die Grundplatte 4 und die Zentrumsspanneinheit 5 befestigt. Der Rundlauf dieser Komponenten wird durch den Zentrumszylinderstift 11 gewährleistet.

Entlang eines Umfangs der Adapterplatte 3 können auch Greiferrillen 12 angebracht sein, um einen automatisierten Wechsel und Austausch dieser Adapterplatte 3 zu ermöglichen, bzw. zu erleichtern.

Bei dem in Fig. 1 dargestellten Ausführungsbeispiel ist die Zentrumsspanneinheit 5 über zwei Hubbolzen 13 an der Grundplatte 4 gelagert, so dass die Zentrumsspanneinheit entgegen der Federkraft von um die Hubbolzen 13 angeordneten Druckfedern 14 in Richtung der Drehachse verschoben werden kann. Die Druckfedern 14 können entfallen, sollte die Zentrumsspanneinheit 5 hydraulisch oder pneumatisch steuerbar und verlagerbar sein.

Auf einer dem Rohling 2 zugewandten Seite der zwei Hubbolzen 13 ist ein die beiden Hubbolzen 13 verbindendes Querjoch 15 angeordnet. Das Querjoch 15 hat die Aufgabe, als Kegelstifte 16 ausgestaltete Ausformungen zum Eingriff in den Rohling 2, bzw. zur Fixierung des Rohlings 2 aufzunehmen. Auf dem Querjoch 15 können mehrere Bohrungen vorgesehen sein, um eine variable Anordnung der Kegelstifte 16 und damit eine für jeden Einzelfall geeignete Anpassung der Anordnung der Kegelstifte 16 zu ermöglichen. Für eine Turbinenschaufelfuß-Spannung sind in der Regel zwei Kegelstifte 16 notwendig. Es kann auch eine zusätzliche Zentrumsfixierung erfolgen, so dass drei Kegelstifte 16 erforderlich sind. Für eine Turbinenschaufelkopf-Spannung reicht meistens ein Kegelstift 16 aus. Es können aber auch im Einzelfall mehr sein.

Durch diese Kegelstifte 16, die turbinenschaufelspezifisch auf dem Querjoch 15 angebracht werden, wird die Turbinenschaufel relativ zur Zentrumsspanneinheit 5 und damit zur Drehachse 8 ausgerichtet und fixiert. Somit ist gewährleistet, dass die Turbinenschaufel immer zur Maschinendrehachse rotationssymmetrisch läuft.

Die Zentrumsspanneinheit 5 könnte alternativ für einfachere Aufgaben direkt auf der Adapterplatte 3 montiert sein.

Die Zentrumsspanneinheit 5 weist zwei gegenüberliegende Spannbackenmodule 6 auf, die über eine Zentrumsspindelpositioniereinheit 17 miteinander verbunden und relativ zueinander verlagerbar sind.
In der Zentrumsspindelpositioniereinheit 17 befindet sich eine Gewindespindel 18, mit welcher die Spannbackenmodule 6 verlagert und fixieren werden können. Die Gewindespindel 18 kann ein Spiel von etwa einer Steigung der Gewindespindel 18 aufweisen, so dass sich beim Einspannen erst die einander zugeordneten Klemmbacken 7 an den Rohling 2 anlegen, bevor der eigentliche Spannprozess beginnt.

Eine Begrenzung der Verlagerung der Zentrumsspindelpositioniereinheit 17 wird durch zwei Zylinderstifte 19 gewährleistet, wobei stattdessen auch Madenschrauben oder Nut-Feder-Vorrichtungen denkbar sind.

An beiden Enden ist die Gewindespindel 18 mit einem Sechskantkopf 20 versehen, durch den sie mit handelsüblichen Schraubsystemen manuell oder hydraulisch, elektrisch oder pneumatisch verstellt werden kann.

In den beiden gegenüberliegenden Spannbackenmodulen 6 sind mindestens eine, üblicherweise jedoch mehrere starr oder beweglich, mit oder ohne Tiefenanschlag ausgestaltete Klemmbacken 7 angeordnet, bzw. gelagert. Zwischen den Klemmbacken 7 kann entweder das Querjoch 15 oder der Rohling 2, bzw. die Turbinenschaufel zentrisch geklemmt und festgelegt werden.

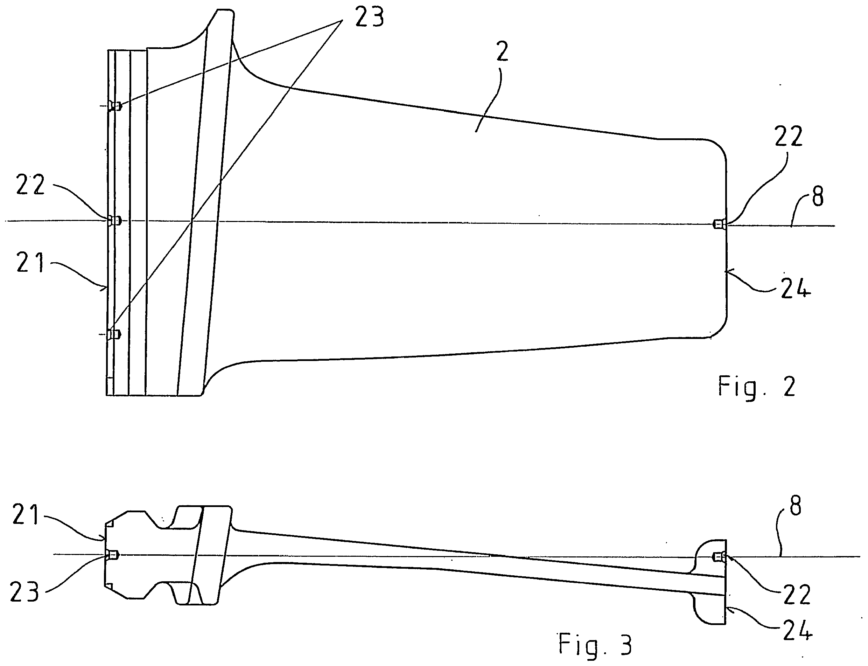

Lediglich beispielhaft wird in den Fig. 2 und 3 ein Rohling 2 einer Turbinenschaufel abgebildet. Der Rohling 2 weist an einer Endfläche 21 des Schaufelfußes eine Mittenbohrung 22 zur Vorgabe der Rotationsachse, bzw. Drehachse 8 und zwei nachträglich angebrachte, außermittige und unsymmetrisch angeordnete Sackbohrungen 23 auf. An einer entgegengesetzten Endfläche 24 befindet sich lediglich eine an einem Quersteg mittig zur Drehachse 8 angeordnete Mittenbohrung 22.

Um das gesamte Turbinenschaufelspektrum abdecken zu können, werden üblicherweise verschiedene Spannbackenmodule 6 in mehreren Spannbackengrößen benötigt. Die Formgebung und Ausgestaltung der Spannbackenmodule 6 und der darin aufgenommenen Klemmbacken 7 richten sich vor allem nach dem gewünschten Spann-/Klemmmoment, der Kopfgeometrie, der zu spannenden kleinen oder großen Schaufeln und nach der Klemmbreite.

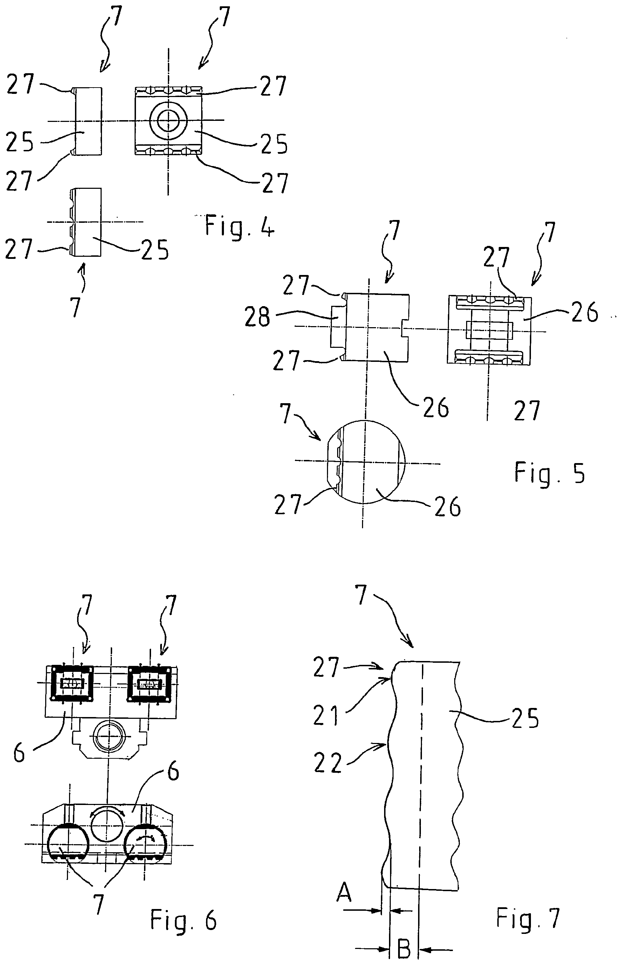

In den Fig. 4 und 5 sind verschiedene Ausgestaltungen von Klemmbacken 7 dargestellt. Während in Fig. 4 die Klemmbacke 7 einen quaderförmigen Grundkörper 25 aufweist, weist die in Fig. 5 dargestellte Klemmbacke 7 einen zumindest abschnittsweise zylinderförmigen Grundkörper 26 auf.

Um eine bessere Klemmwirkung der Klemmbacken 7 zu bewirken ist vorgesehen, dass die Klemmbacken 7 mindestens im Bereich der jeweiligen Seitenkanten eine wellenförmige Oberflächenprofilierung 27 aufweisen, wie sie exemplarisch in Fig. 7 abgebildet ist. Der Profilierung 27 ist beispielsweise so gewählt, dass die Krümmungsradien, bzw. Abmessungen
R1 zwischen 0.05 und 0.1 der Breite der Klemmbacke 7,
R2 zwischen 0.1 und 0.4 der Breite der Klemmbacke 7,
A zwischen 0.01 und 0.04 der Breite der Klemmbacke 7 und
B zwischen 0.05 und 0.1 der Breite der Klemmbacke 7 betragen.

Die Klemmbacken 7, bzw. insbesondere der Bereich der Oberflächenprofilierung 27 kann aus einem besonders harten Material bestehen, so dass die Oberflächenprofilierung in den einzuspannenden Rohling 2 etwas eindringen und eine formschlüssige Verbindung herstellen kann.

In Fig. 6 sind die in Fig. 5 dargestellten Klemmbacken 7 in einem daran angepassten Spannbackenmodul 6 aufgenommen. Die Klemmbacken 7 sind schwenkbar in dem Spannbackenmodul 6 gelagert, so dass ein optimales Einspannen eines Rohlings 2 auch mit gekrümmt verlaufenden Oberflächen auf einer kleinen parallel zu bearbeitenden Fläche oder auf dem unbearbeiteten Basismaterial erfolgen kann.

Für vorgearbeitete, parallel ausgerichtete Spannflächen an dem Rohling 2 kommen meist starr in dem Spannbackenmodul 6 angeordnete Klemmbacken 7 mit oder ohne einen in Fig 5 exemplarisch abgebildeten Tiefenanschlag 28 zum Einsatz. Für schräge oder unbearbeitete Spannflächen kommen überwiegend die schwenkbar gelagerten Klemmbacken 7 mit oder ohne Tiefenanschlag 28 zum Einsatz. Auch die Spannbackenmodule 6 können schwenkbar gelagert sein. Hierdurch wird eine optimale Anpassung an nahezu alle gekrümmten Konturen eines Rohlings 2 erreicht.

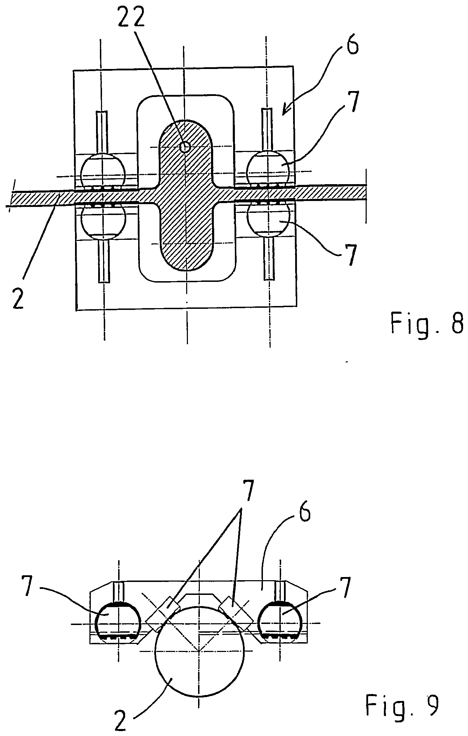

Liegt das Rotationszentrum einer Turbinenschaufel außerhalb der eigentlichen Schaufelblattgeometrie, wie es bei allen großen Kompressorschaufeln üblich ist, können seitlich versetzte Klemmbacken 7 verwendet werden (Fig. 8), die direkt an der Schaufelblattaußengeometrie am Schaufelkopf anliegen. Die Dickentoleranz des Schaufelblatts wird dadurch gewährleistet, dass das nicht dargestellte Lager der Gewindespindel ein Axialspiel aufweist, welches betragsmäßig beispielsweise etwa der Spindelsteigung entspricht. Hierdurch werden die beiden Klemmbacken 7 zuerst an die Oberfläche des Rohlings 2 herangeführt, um anschließend nach ihrem Anliegen an der Blattoberfläche die Einspannung vorzunehmen und die Klemmwirkung zu erzeugen.

Ein in Fig. 9 dargestelltes Spannbackenmodul 6 ist in besonders vorteilhafter Weise für das Spannen von komplex gestalteten Oberflächen oder beispielsweise Zylinderflächen eines Rohlings 2 geeignet.

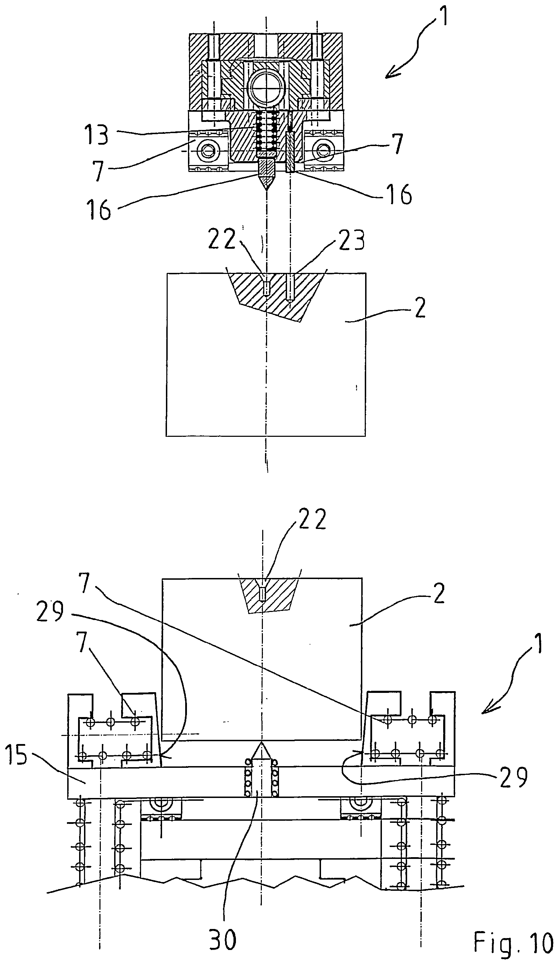

In Fig. 10 ist ein Ausführungsbeispiel dargestellt, bei dem ein quaderförmiger Rohling 2 mit lediglich an einer Endfläche 21 befindlichen Bohrungen (Mittenbohrung 22 und Sackbohrung 23) zwischen zwei Spannvorrichtungen 1 eingespannt werden soll.

Für die Aufnahme des Rohlings 2 im Bereich der Endfläche 21 mit der Mittenbohrung 22 ist ein Querjoch nicht erforderlich. Neben einem mittig angeordneten Kegelstift 16 zur mittigen Positionierung des Rohlings 2 ist ein weiterer Kegelstift 16 außermittig angeordnet und greift in eine daran angepasste Sackbohrung 23 in dem Rohling 2 ein. Durch diesen zusätzlichen, außermittig angeordneten Kegelstift 16 wird die richtige Lageposition, bzw. Ausrichtung des Rohlings 2 sichergestellt.

Auf der entgegengesetzten Seite des Rohlings 2 weist die dort angeordnete Spannvorrichtung 1 ein Querjoch 15 mit federgelagerten Klemmbacken 7 auf, die zudem eine schräge Führungsfläche 29 aufweisen und den Rohling 2 beim Einschieben zwangsweise in die Mitte zwischen die beiden Klemmbacken 7 verschieben und anschließend dort festlegen.

Sollte keine Mittenbohrung vorhanden sein, so könnte ein Kerbstift 30 mittig angeordnet sein, der beim Spannen, also beim Zusammendrücken der beiden Spannbacken in die Mitte der Spannfläche eingedrückt wird und eine sichtbare Markierung in dem Rohling 2 hinterlässt. Hierdurch kann der Bediener bei einer Zweitspannung immer die Spannmitte wieder erkennen.

Derartige optionale Zusatzkomponenten haben die Aufgabe, dem Bediener mehr Sicherheit beim Spannen oder Zweitspannen einer Turbinenschaufel zu geben. Es handelt sich hierbei ausschließlich um Komponenten, die zur Mittellagenstabilisierung bzw. zur Wiederauffindung der Mittenlage der Turbinenschaufel in der Zentrumsspanneinheit 5 beitragen.

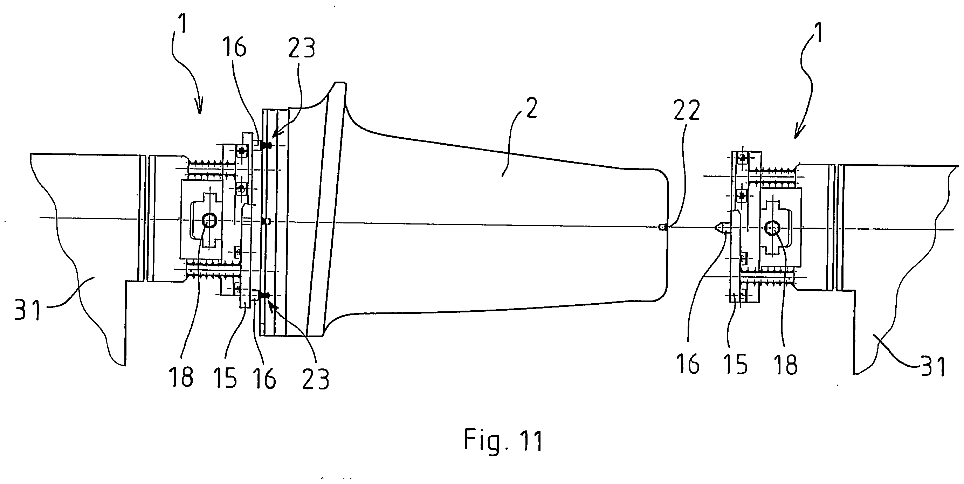

In den Figuren 11 bis 17 wird exemplarisch ein Einspannvorgang eines Rohlings 2 einer Turbinenschaufel dargestellt. Das Einspannen einer solchen Turbinenschaufel erfolgt wegen ihrer Größe und ihres Gewichtes meistens auf beiden Seiten des Rohlings 2. Hierzu wird eine Seite einer Fräsmaschine 31 mit einer Spannvorrichtung 1 ausgestattet, die ein Querjoch 15 mit zwei - im richtigen Abstand und in der richtigen Lage (Bohrbild wie im Fußende des Turbinenschaufelrohlings) Kegelstifte 16 aufweist. Die entgegengesetzte Seite der Fräsmaschine 31 wird dann mit einer Spannvorrichtung ausgestattet, die ausschließlich in der Mitte des Querjochs 15 nur einen Kegelstift 16 aufweist (Fig. 11).

Das Einspannen des Turbinenschaufelrohlings 2 zwischen den beiden Spannvorrichtungen 1 erfolgt dann in den nachfolgend beschriebenen Schritten.

Vor dem eigentlichen Einspannen des Rohlings 2 werden die Querjoche 15 in den beiden Spannvorrichtungen 1 durch die jeweiligen Spannbackenmodule 6 im ausgefahrenen Zustand eingeklemmt. Dies erfolgt entweder per Hand, also durch Verdrehen der Gewindespindel 18 mit einem Drehmomentschlüssel oder durch einen Elektro-, Hydro- oder Pneumatikschrauber. Somit sind beide Querjoche 15 nicht mehr axial verschiebbar.

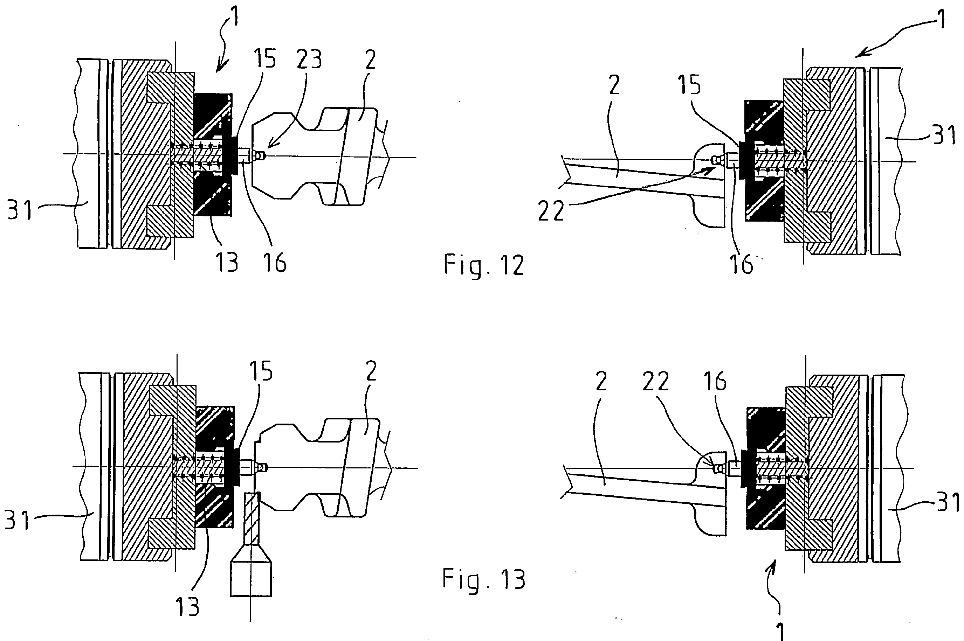

Der Rohling 2 wird dann so zwischen die beiden Spannvorrichtungen 1 eingelegt, dass die beiden Sackbohrungen 23 Sackbohrung am Fußende des Rohlings 2 jeweils in den zugeordneten Kegelstift 16 eingreifen. Auf der entgegengesetzten Seite wird die Spannvorrichtung 1 so zum Rohling 2 verlagert, dass der mittig im Querjoch 15 angeordnete Kegelstift 16 in die kopfseitige Mittenbohrung 22 eingeschoben wird und eingreift (Fig. 12). Somit ist die Turbinenschaufel dann zwischen den drei Kegelstiften 16 der beiden Spannvorrichtungen 1 fixiert und geklemmt.

In dieser Position werden dann am Fußende zwei schmale Parallelflächen angefräst (Fig. 13). Bei gebogenen Fußgeometrien sind diese beiden Flächen zwischen 50 und 300 mm lang. Bei geraden Fußgeometrien nutzt man in der Regel die gesamte Fußbreite aus.

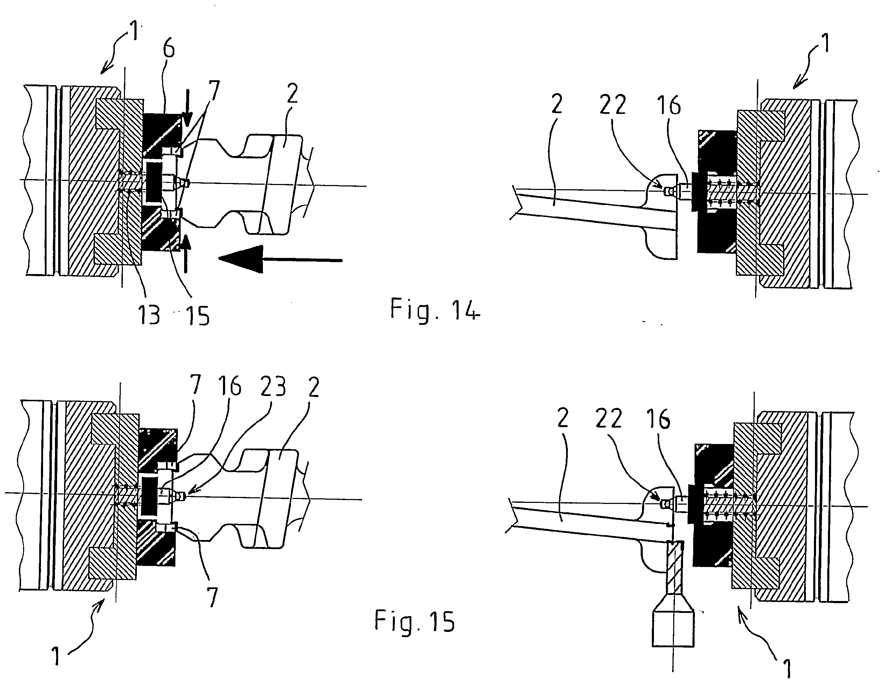

Anschließend werden die Spannbackenmodule 6 auf dieser Seite so weit gelöst, dass man durch Verfahren einer oder beider Spannvorrichtungen in Richtung der Drehachse 8 das Querjoch 15 der Spannvorrichtung 1 so weit nach innen drückt, bis sich die beiden neu gefrästen Parallelflächen zwischen den Klemmbacken 7 der beiden Spannbackenmodule 6 befinden und dort klemmend festgelegt werden können (Fig. 14). Somit ist die Turbinenschaufel in ihrem Fußende fest eingespannt.

Der gleiche Vorgang des Fräsens von zwei schmalen Parallelflächen oder eines Zylinders wird analog zum Fußende auch am Kopfende durchgeführt (Fig. 15). Anschließend werden die Spannbackenmodule 6 seitlich verlagert, um den Rohling 2 an dessen Kopfende auch durch Klemmen im Bereich der neu gefrästen Spannflächen festlegen zu können.

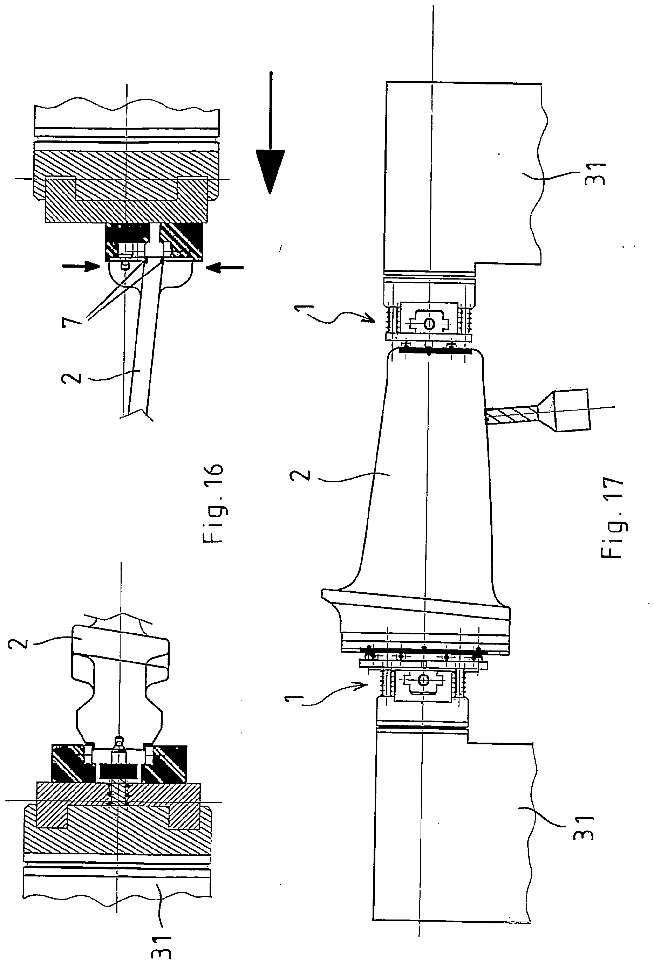

Somit ist eine große, schwere Turbinenschaufel zuverlässig fixiert und geklemmt (Fig. 16). Der Arbeitsschritt des Anarbeitens, bzw. des Fräsens von Spannflächen muss nicht im Voraus gesondert und insbesondere nicht auf einer gesonderten Bearbeitungsmaschine oder Spannvorrichtung durchgeführt werden, sondern kann während des Einspannvorgangs bei Bedarfs kurz vor einer endgültigen Festlegung des Rohlings 2 zwischen den Klemmbacken 7 durchgeführt werden.

Da die Spannflächen, also schmale Parallelstege am Fuß- und Kopfende bzw. Parallelstege am Fußende und Zylinder am Kopfende, außerhalb der eigentlichen Turbinenschaufelgeometrie liegen, kann man mit dem erfindungsgemäßen Verfahren, bzw. der erfindungsgemäßen Spannvorrichtung 1 alle Umfangsgeometrien, also das Fräsen oder Schleifen des gesamten Schaufelblattes (Fig. 17) wie auch der gesamten Fußgeometrie, durchführen, was bei allen anderen Spannsystemen aufgrund ihrer tiefen Spannflächen nicht möglich ist.

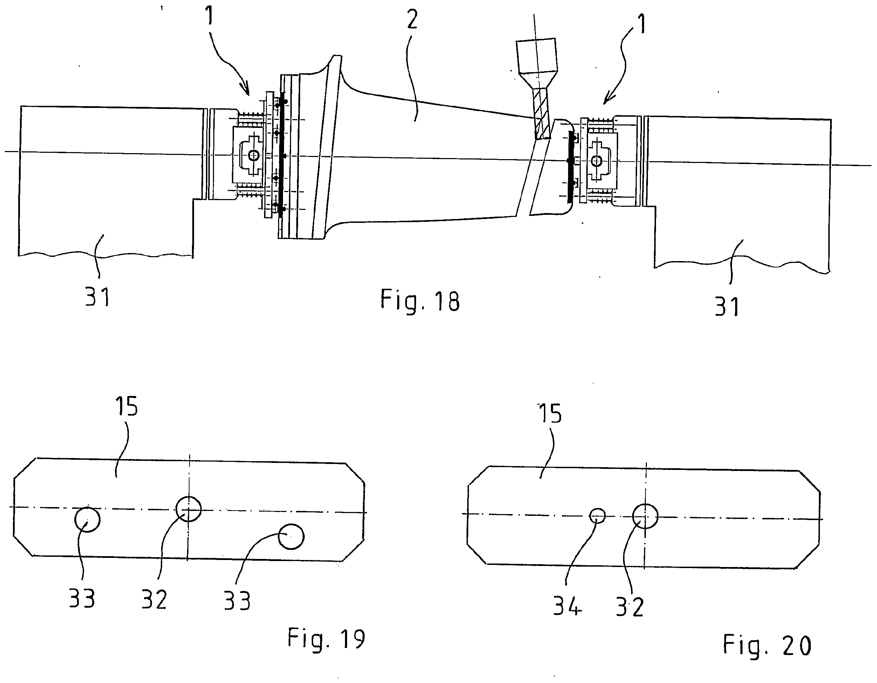

In Abhängigkeit von der jeweils herzustellenden Turbinenschaufel kann auch die Turbinenschaufel am Kopfende abgelängt und die Endkontur der Kopfpartie fertig bearbeitet werden, ohne dass eine erneute Einspannung des Rohlings erforderlich wird (Fig. 18). Bei einer derart hergestellten Turbinenschaufel muss anschließend lediglich auf einer weiteren, einfacheren Fräsmaschine das Fußende fertig bearbeitet werden. Alle funktionsrelevanten Formgebungen lassen sich mit dem vorangehend beschriebenen Verfahren mit einer einzigen Einspannung herstellen. Dies hat einen positiven Effekt auf die Genauigkeit und die Herstellungskosten derartiger Turbinenschaufeln.

Um die verschiedenen Formgebungen der Rohlinge und der fertig bearbeiteten Turbinenschaufeln berücksichtigen und in allen Fällen eine möglichst zuverlässige Einspannung gewährleisten zu können, können verschiedene Formgebungen für das Querjoch 15 zum Einsatz kommen. In den Fig. 19 und 20 sind exemplarisch Formgebungen eines Querjochs 15 für Rohlinge 2 für Schmiede- und Gussschaufeln mit einer mittig angeordneten Bohrung 32 sowie mit zwei außermittig und asymmetrisch angeordneten Bohrungen 33 zur Aufnahme von Kegelstiften 16 (Fig. 19) sowie eines Querjochs 15 für quaderförmige Rohlinge 2 mit einer mittig angeordneten Bohrung 32 sowie einer seitlich versetzten Bohrung 34 für einen Kerbstift 30 (Fig. 20) dargestellt. Es ist ebenfalls denkbar, ein Querjoch 15 mit verschiedenen Bohrungen 32, 33 und 34 sowie jeweils in verschiedenen Abständen zur Mittenbohrung 32 auszugestalten, welches dann für verschiedene Rohlinge 2 verwendet werden kann.

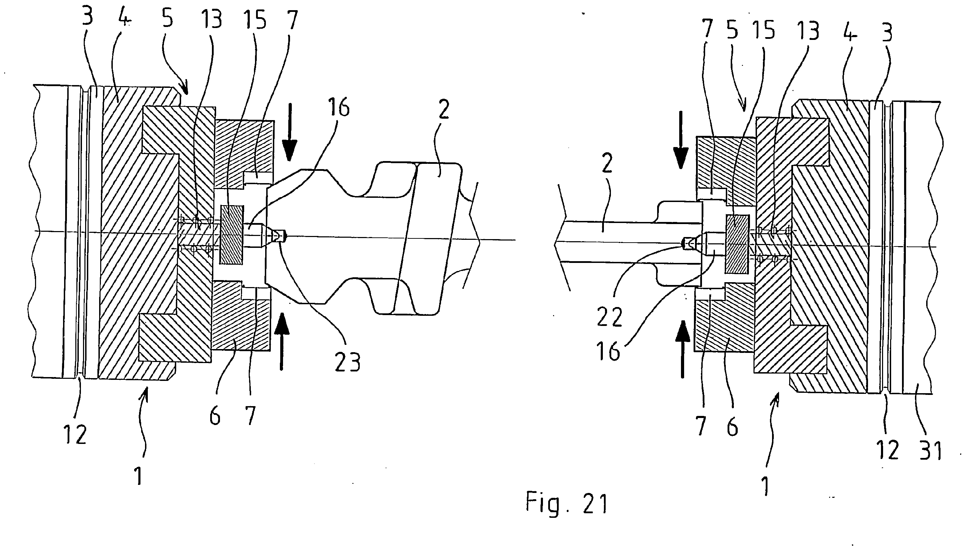

Sollten die Oberflächen beispielsweise der geschmiedeten oder gegossenen Fuß- und Kopfpartien, auf denen gespannt werden soll, bereits gut parallel ausgeführte Fläche besitzen, kann das Fräsen von Parallelflächen vermieden und direkt geklemmt, bzw. eingespannt werden (Fig. 21).

Bei einer so hergestellten Turbinenschaufel muss man nur noch auf einer zweiten einfachen Fräsmaschine das Fußende fertigfräsen. Alle funktionswichtigen Geometrien einer Turbinenschaufel lassen sich mit dieser Spanntechnik in einer Aufspannung herstellen. Dies hat vor allem einen positiven Effekt auf die Genauigkeit und die Herstellkosten einer Schaufel.

Bei kleinen und leichteren Turbinenschaufeln dieses Typs kann die zweite Kopfklemmung entfallen. Hier kommt für die Kopfzentrumszentrierung ein einfacher Reitstock zum Einsatz. Alle anderen Bearbeitungsschritte können wie beschrieben durchgeführt werden.

Quaderförmige Rohlinge 2, aus denen ca. 60% aller Turbinenschaufeln bis zu einer Länge von etwa 700 mm hergestellt werden, haben oftmals keine vorgegebene Mittenbohrung und sind zudem meistens nicht präzise quaderförmig, so dass die Endflächen nicht zwingend senkrecht zur Drehachse 8 ausgerichtet sind. In vielen Fällen werden diese Rohlinge 2 auch nur auf die gewünschte Länge abgeschert, so dass ihre beiden Endbereiche abgerundet sind.

Bei derartigen Rohlingen 2 müssen zunächst in einem vorbereitenden Arbeitsschritt die Mittenbohrung 22 und mindestens eine zusätzliche Sackbohrung 23 zur eindeutigen Vorgabe einer Ausrichtung des Rohlings 2 erzeugt werden.

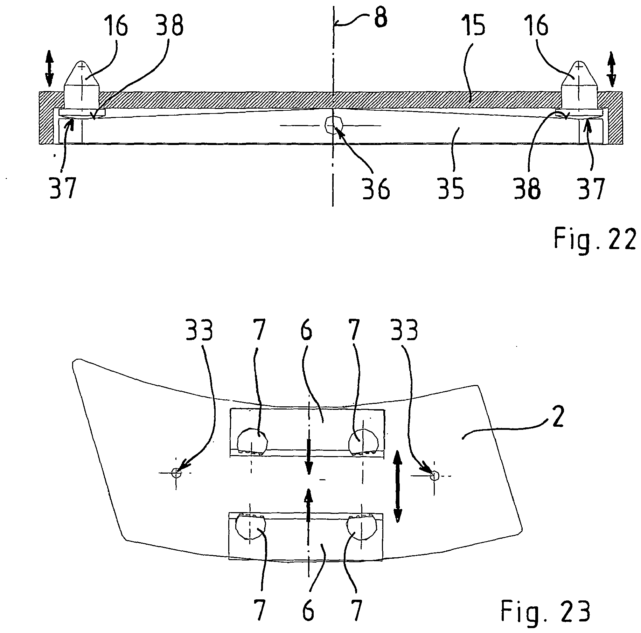

In Fig. 22 ist exemplarisch ein Querjoch 15 mit zwei Kegelstiften 16 dargestellt, die auf gegenüberliegenden Seiten außerhalb der bei dieser Darstellung etwa mittig angeordneten Schaufelrotationsachse, bzw. Drehachse 8 angeordnet sind. Die beiden Kegelstifte 16 sollen in zwei Bohrungen 33 eingreifen und den Rohling 2 relativ zu dem Querjoch 15, bzw. der dieses Querjoch 15 tragenden Spannvorrichtung 1 festlegen. Die beiden Bohrungen 33, die ebenso wie der Rohling 2 in Fig. 22 nicht dargestellt sind, sind außermittig und asymmetrisch in einer Endfläche des zu bearbeitenden Rohlings 2 angeordnet.

Die beiden Kegelstifte 16 sind axial verschiebbar in dem Querjoch 15 gelagert. In dem Querjoch ist eine Wippe 35 um einen Bolzen 36 schwenkbar gelagert, der senkrecht zur Drehachse 8 näherungsweise mit gleichem Abstand zwischen den beiden Kegelstiften 16 festgelegt ist. An ihren dem Rohling 2 abgewandten Stirnseiten 37 liegen die Kegelstifte 16 an der Wippe 35 an. Bei einer Schwenkbewegung der Wippe 35 um den Bolzen 36 werden beide Kegelstifte 16 entsprechend der Bewegung der jeweils zugeordneten Auflagefläche 38 der Wippe 35 gegenläufig axial verlagert. Auf diese Weise können Abweichungen der Bohrungen 33, die nicht genau in einer Ebene senkrecht zur Drehachse 8 in den Rohling 2 eingebracht wurden, ausgeglichen werden. Bei einem ausreichenden Anpressdruck der Spannvorrichtung 1, bzw. des Querjochs 15 mit den beiden Kegelstiften 16 an die zugeordnete Endfläche des Rohlings 2 dringen die beiden Kegelstifte jeweils spielfrei in die zugeordnete Bohrung 33 ein und gewährleisten eine sichere und zuverlässige Aufnahme des Rohlings 2 in der Spannvorrichtung 1.

Die Spannvorrichtung 1 weist zweckmäßigerweise senkrecht zur Drehachse 8 verlagerbare Spannbackenmodule 6 mit jeweils schwenkbar gelagerten Klemmbacken 7 auf (Fig. 23). Bei einem Einspannvorgang wird zunächst ein erstes Spannbackenmodul 6 an den Rohling 2 herangeführt, bis die beiden Klemmbacken 7 dicht anliegen. Anschließend wird das zweite Spannbackenmodul 6 an den Rohling 2 herangeführt, bis dessen beide Klemmbacken 7 ebenfalls an dem Rohling 2 anliegen. Anschließend wird durch eine Druckerhöhung der gewünschte Spanndruck zwischen den Klemmbacken 7 erzeugt und auf den Rohling 2 ausgeübt.

## Patentansprüche

1. Spannvorrichtung für die Aufnahme eines Rohlings einer Turbinenschaufel in einer Bearbeitungsmaschine, insbesondere in einer Fräsmaschine, mit zwei relativ zueinander verlagerbaren Klemmbacken, wobei die Spannvorrichtung (1) mindestens eine in Richtung des aufzunehmenden Rohlings (2) vorspringende Ausformung (16) zum Eingriff in eine Ausnehmung (23) des Rohlings (2) der Turbinenschaufel aufweist, die außermittig angeordnet ist, **dadurch gekennzeichnet, dass** die mindestens eine außermittige Ausformung (16) auf einem zwischen den Klemmbacken (7) quer zu einer Rotationsachse angeordneten Querjoch (15) angeordnet ist.

2. Spannvorrichtung nach Anspruch 1, **dadurch gekennzeichnet, dass** das Querjoch (15) in Richtung der Rotationsachse von dem Rohling (2) weg verlagerbar ist.

3. Spannvorrichtung nach Anspruch 2, **dadurch gekennzeichnet, dass** das Querjoch (15) entgegen einer Federkraft von dem Rohling (2) weg verlagerbar ist.

4. Spannvorrichtung nach einem der Ansprüche 1 bis 3, **dadurch gekennzeichnet, dass** die mindestens eine außermittig angeordnete Ausformung ein Kegelstift (16) ist.

5. Spannvorrichtung nach einem der vorangehenden Ansprüche, **dadurch gekennzeichnet, dass** die Spannvorrichtung (1) eine auf dem Querjoch (15) mittig angeordnete Ausformung (16) aufweist.

6. Spannvorrichtung nach einem der vorangehenden Ansprüche, **dadurch gekennzeichnet, dass** die Klemmbacken (7) an einer dem aufzunehmenden Rohling (2) zugewandten Oberfläche mindestens eine vorspringende Ausformung aufweisen.

7. Spannvorrichtung nach Anspruch 6, **dadurch gekennzeichnet, dass** die Klemmbacken (7) eine wellenförmige Oberflächenprofilierung (27) aufweisen.

8. Spannvorrichtung nach einem der vorangehenden Ansprüche, **dadurch gekennzeichnet, dass** die Klemmbacken (7) schwenkbar gelagert sind.

9. Spannvorrichtung nach einem der vorangehenden Ansprüche, **dadurch gekennzeichnet, dass** die Klemmbacken (7) quer zur Rotationsachse verlagerbar sind.

10. Spannvorrichtung nach einem der vorangehenden Ansprüche, **dadurch gekennzeichnet, dass** das Querjoch (15) zwei auf gegenüberliegenden Seiten außerhalb der Drehachse (8) angeordnete axial verlagerbare Kegelstifte (16) trägt und eine senkrecht zur Drehachse (8) schwenkbar gelagerte Wippe (35) aufweist, die mit den beiden Kegelstiften (16) in Wirkverbindung steht.

## Claims

1. Clamping device for receiving a blank of a turbine blade in a processing machine, in particular in a milling machine, comprising two clamping jaws that are displaceable relative to one another, wherein the clamping device (1) comprises at least one shaped portion (16) projecting in the direction of the blank (2) to be received for engagement in a recess (23) of the blank (2) of the turbine blade which is eccentrically arranged, **characterized in that** the at least one eccentric shaped portion (16) is arranged on a cross member (15) that is arranged transversely to a rotational axis between the clamping jaws (7).

2. Clamping device according to claim 1, **characterized in that** the cross member (15) can be moved away from the blank (2) in the direction of the rotational axis.

3. Clamping device according to claim 2, **characterized in that** the cross member (15) can be moved away from the blank (2) counter to a spring force.

4. Clamping device according to any of claims 1 to 3, **characterized in that** the at least one eccentrically arranged shaped portion is a taper pin (16).

5. Clamping device according to any of the preceding claims, **characterized in that** the clamping device (1) comprises a shaped portion (16) that is centrally arranged on the cross member (15).

6. Clamping device according to any of the preceding claims, **characterized in that** the clamping jaws (7) comprise at least one projecting shaped portion on a surface facing the blank (2) to be received.

7. Clamping device according to claim 6, **characterized in that** the clamping jaws (7) have undulated surface profiling (27) .

8. Clamping device according to any of the preceding claims, **characterized in that** the clamping jaws (7) are pivotally mounted.

9. Clamping device according to any of the preceding claims, **characterized in that** the clamping jaws (7) can be moved transversely to the rotational axis.

10. Clamping device according to any of the preceding claims, **characterized in that** the cross member (15) supports two axially movable taper pins (16) that are arranged on opposite sides outside the rotational axis (8), and comprises a rocker (35) which is pivotally mounted perpendicularly to the rotational axis (8) and is operatively connected to the two taper pins (16).

## Revendications

1. Dispositif de mise sous tension pour le logement d'une ébauche d'une aube de turbine dans une machine d'usinage, en particulier dans une machine de fraisage, avec deux mâchoires de serrage pouvant être déplacées l'une par rapport à l'autre, dans lequel le dispositif de mise sous tension (1) présente au moins une protubérance (16) faisant saillie en direction de l'ébauche (2) à loger, destinée à venir en prise avec un creux (23) de l'ébauche (2) de l'aube de turbine, qui est disposée de manière excentrée, **caractérisé en ce que** l'au moins une protubérance (16) excentrée est disposée sur une culasse transversale (15) disposée entre les mâchoires de serrage (7) de manière transversale par rapport à un axe de rotation.

2. Dispositif de mise sous tension selon la revendication 1, **caractérisé en ce que** la culasse transversale (15) peut être déplacée de manière à s'éloigner de l'ébauche (2) en direction de l'axe de rotation.

3. Dispositif de mise sous tension selon la revendication 2, **caractérisé en ce que** la culasse transversale (15) peut être déplacée à l'encontre d'une force de ressort de manière à s'éloigner de l'ébauche (2).

4. Dispositif de mise sous tension selon l'une quelconque des revendications 1 à 3, **caractérisé en ce que** l'au moins une protubérance disposée de manière excentrée est une tige conique (16).

5. Dispositif de mise sous tension selon l'une quelconque des revendications précédentes, **caractérisé en ce que** le dispositif de mise sous tension (1) présente une protubérance (16) disposée de manière centrée sur la culasse transversale (15).

6. Dispositif de mise sous tension selon l'une quelconque des revendications précédentes, **caractérisé en ce que** les mâchoires de serrage (7) présentent au niveau d'une surface tournée vers l'ébauche (2) à loger au moins une protubérance faisant saillie.

7. Dispositif de mise sous tension selon la revendication 6, **caractérisé en ce que** les mâchoires de serrage (7) présentent un profilage de surface (27) de forme ondulée.

8. Dispositif de mise sous tension selon l'une quelconque des revendications précédentes, **caractérisé en ce que** les mâchoires de serrage (7) sont montées de manière à pouvoir pivoter.

9. Dispositif de mise sous tension selon l'une quelconque des revendications précédentes, **caractérisé en ce que** les mâchoires de serrage (7) peuvent être déplacées de manière transversale par rapport à l'axe de rotation.

10. Dispositif de mise sous tension selon l'une quelconque des revendications précédentes, **caractérisé en ce que** la culasse transversale (15) supporte deux tiges coniques (16) pouvant être déplacées de manière axiale, disposées sur des côtés se faisant face à l'extérieur de l'axe de rotation (8) et présente une bascule (35) montée de manière à pouvoir pivoter de manière perpendiculaire par rapport à l'axe de rotation (8), qui est en liaison fonctionnelle avec les deux tiges coniques (16).
